# EUROPÄISCHE PATENTANMELDUNG

(11) **EP 2 319 809 A1**
(43) Veröffentlichungstag der Anmeldung: **11.05.2011**
(21) Anmeldenummer: 09175151.1
(22) Anmeldetag: 05.11.2009
(51) Int. Cl.: C02F 3/12

(54) **Tauchwand und Kläranlage mit Tauchwand zur Reduzierung der Belebtschlammkonzentration im Zulauf zur Nachklärung**

(71) Anmelder: WTE Wassertechnik GmbH, 45136 Essen (DE)
(72) Erfinder: Plass, Rainer Dr.-Ing., 22301 Hamburg (DE); Wotrubez, Herbert, Dipl.-Ing., 65552 Limburg (DE); Förster, Gerrit, Dipl.-Ing., 45130 Essen (DE); Schröder, Ralf, Dr.-Ing., 45239 Essen (DE)
(74) Vertreter: Raffay & Fleck

(57) **Zusammenfassung**

Die vorliegende Erfindung betrifft eine Tauchwand (7) zum Einbringen in ein Belebungsbecken, sowie ein mit einer solchen Tauchwand angestattetes Belebungsbecken (1) und die Verwendung einer solchen Tauchwand.
Aufgabe der Erfindung ist es, eine Lösung anzugeben, mit der auf einfache Weise vermieden werden kann, dass zu hohe Schwimmschlammmengen in ein nachgelagertes Nachklärungsbecken gelangen können.
Die Aufgabe wird gelöst durch ein Belebungsbecken mit einer Tauchwand, eine Tauchwand und eine Verwendung einer Tauchwand, wobei die Tauchwand (7) mindestens einen ersten Tauchwandabschnitt (8) und einen zweiten Tauchwandabschnitt (9) aufweist, wobei der erste Tauchwandabschnitt (8) eine von einem ersten Ende des ersten Tauchwandabschnitts (8) weg und nach oben ansteigende Unterkante (14) aufweist und wobei der zweite Tauchwandabschnitt (9) in einem ersten stumpfen Winkel (22) zu einer Anströmseite (13) des ersten Tauchwandabschnitts (8) an einem zweiten Ende des ersten Tauchwandabschnitts (8) anschließt und wobei sich der zweite Tauchwandabschnitt (9) nach unten hin mindestens bis zur obersten Stelle der ansteigenden Unterkante (14) erstreckt.

## Beschreibung

Die vorliegende Erfindung betrifft eine Tauchwand zum Einbringen in ein Belebungsbecken, sowie ein mit einer solchen Tauchwand angestattetes Belebungsbecken und die Verwendung einer solchen Tauchwand.

Kläranlagen arbeiten meist nach dem Prinzip, dass die zu eliminierenden Inhaltsstoffe in einem belüfteten Belebungsbecken, das mit Luft oder Sauerstoff begast wird, von Mikroorganismen verstoffwechselt werden. Dabei entsteht Schlamm, der sich dann in einem nachgelagerten Nachklär- oder Absetzbecken absetzen soll. Zu diesem Zweck weist das Belebungsbecken einen Überlauf auf, über den das Abwasser-Belebtschlamm-Gemisch in das Nachklärbecken gelangen kann. Eine solche Kläranlage, die auch weitere Vorkehrungen bezüglich des Schlamms trifft, ist beispielsweise aus der DE 25 20 397 bekannt.

Aufgabe der Erfindung ist es somit, eine Lösung anzugeben, mit der auf einfache Weise einen Teil des Belebtschlammes im Belebungsbecken zurück zu halten, um damit die Feststoffbelastung der Nachklärung zu reduzieren.

Der Erfindung liegt dabei die Erkenntnis zugrunde, dass es durch den Einsatz der erfindungsmäßigen Mittel überraschend realisierbar ist, einen Teil des Belebtschlammes im Belebungsbecken zurück zu halten. Darüber hinaus wird bei Auftreten von Schwimmschlamm dieser zum großen Teil in die belüftete Zone zurück geführt und dort durch Entgasung zerstört.

Die Erfindung wird gelöst durch eine Tauchwand gemäß Anspruch 1, durch ein Belebungsbecken gemäß Anspruch 6, sowie durch eine Verwendung nach Anspruch 14. Die abhängigen Ansprüche 2 bis 5 bzw. 7 bis 13 geben vorteilhafte Weiterbildungen an.

Eine erfindungsgemäße Tauchwand nach Anspruch 1 zum Einsetzen in ein einen Ab- oder Überlauf aufweisendes Belebungsbecken weist mindestens einen ersten und einen zweiten Tauchwandabschnitt auf, wobei der erste Tauchwandabschnitt eine von einem ersten Ende des ersten Tauchwandabschnittes weg nach oben ansteigende Unterkante aufweist, und wobei der zweite Tauchwandabschnitt in einem ersten stumpfen Winkel zu einer Anströmseite des ersten Tauchwandabschnitts an einem zweiten Ende des ersten Tauchwandabschnitts anschließt und wobei sich der zweite Tauchwandabschnitt nach unten hin mindestens bis zur obersten Stelle der ansteigenden Unterkante erstreckt.

Die Tauchwand weist somit mindestens zwei Tauchwandabschnitte auf, die einen stumpfen Winkel bilden. Dieser stumpfe Winkel ist zwischen den Tauchwandabschnitten auf der Anströmseite der Tauchwandabschnitte, also zwischen den der Strömung zugewandten Seiten, angeordnet. Unter Anströmseite ist dabei die Seite der Tauchwand zu verstehen, die der Strömung entgegengerichtet ist, auf die die Strömung somit auftrifft. Der erste Tauchwandabschnitt weist eine ansteigende Unterkante auf, die in Richtung zum zweiten Tauchwandabschnitt nach oben hin ansteigt. Die ansteigende Unterkante weist somit in Richtung des ersten Endes des ersten Tauchwandabschnitts eine größere Eintauchtiefe auf als in Richtung des zweiten Endes des ersten Tauchwandabschnitts.

Der zweite Tauchwandabschnitt, der sich somit dem Ende des ersten Tauchwandabschnittes anschließt, zu dem die ansteigende Unterkante ansteigt, erstreckt sich nach unten hin mindestens soweit, wie die ansteigende Unterkante nach oben hin ansteigt. Dies bedeutet, dass der tiefste Punkt des zweiten Tauchwandabschnittes nicht höher liegt, als der höchste Punkt der ansteigenden Unterkante des ersten Tauchwandabschnittes.

Vorstellbar ist auch eine Anordnung des ersten und zweiten Tauchwandabschnitts ohne einen klar definierten Knick, in dem sich die Schenkel des ersten Stumpfen Winkels treffen. Somit ist es denkbar, dass der Übergang zwischen dem ersten und dem zweiten Tauchwandabschnitt abgerundet ist und nur die von einander abgewandten Enden der Tauchwandabschnitte ein einem stumpfen Winkel zueinander stehen. In einer extremen Ausführung kann auch die gesamte Tauchwand abgerundet, auch halbrund ausgebildet sein. In einem solchen Fall würden gegebenenfalls nur die Tangenten an den von einander abgewandten Enden des ersten und des zweiten Tauchwandabschnitts einen stumpfen Winkel bilden. Es hat sich jedoch gezeigt, dass eine erfindungsgemäße Tauchwand mit einem klar definierten Knick zwischen dem ersten und dem zweiten Tauchwandabschnitt und gerade ausgeführten Tauchwandabschnitten besonders einfach herzustellen ist und in vielen Anwendungsfällen ein besonders gute Separierung ermöglicht.

Unter einem stumpfen Winkel ist ein Winkel zwischen 90° und 180° zu verstehen.

Durch eine erfindungsgemäße Tauchwand ist es möglich, an der Oberfläche schwimmenden Schlamm zurückzuhalten. Dies wird dadurch gewährleistet, dass der erste Tauchwandabschnitt, auf den die Strömung zunächst auftrifft, den an der Oberfläche schwimmenden Schlamm zurückhält und die unterhalb der Wasserlinie befindlichen Substanzen jedoch unter der Tauchwand hindurch tauchen lässt. Die oberflächennahe Strömung wird sich dann entlang der Tauchwand ausbilden und zum Ende des ersten Tauchwandabschnittes weitestgehend parallel zur Tauchwand verlaufen. Aus diesem Grunde ist die ansteigende Unterkante des ersten Tauchwandabschnittes erforderlich.

Die tiefer in die zu klärende Flüssigkeit hinunterragenden Bereiche des ersten Tauchwandabschnittes, also diejenigen Bereiche mit größerer Eintauchtiefe, können zuverlässig das Untertauchen von an der Oberfläche befindlichen Substanzen verhindern, auch wenn diese mit vergleichweise großer Geschwindigkeit in vergleichsweise kleineren Winkeln auftreffen. In den Bereichen, in denen die Strömung schon paralleler zur Tauchwand verläuft, kann die Tauchwand eine niedrigere Eintauchtiefe aufweisen und trotzdem das Untertauchen der an der Oberfläche befindlichen Substanzen zuverlässig verhindern. Der zweite Tauchwandabschnitt dient dann vor allem dazu, zu verhindern, dass die an der Oberfläche befindlichen Substanzen die Tauchwand umschwimmen. Dazu ragt der zweite Tauchwandabschnitt mindestens soweit in die zu klärende Flüssigkeit hinein, wie es auch die oberste Stelle der nach oben hin ansteigenden Unterkante des ersten Tauchwandabschnittes tut. Vorteilhafter Weise erstreckt sich der zweite Tauchwandabschnitt jedoch deutlich weiter in die zu klärende Substanz hinein und weist vorzugsweise eine Eintauchtiefe auf, die mit der tiefsten Eintauchtiefe der ansteigenden Unterkante übereinstimmt.

Die erfindungsgemäß geformte Tauchwand ermöglicht ein einfaches und zuverlässiges Zurückhalten von an der Oberfläche befindlichen Substanzen, insbesondere von Schwimmschlamm.

Durch die Anordnung der Tauchwand wird erreicht, dass sich hinter der Tauchwand eine strömungsberuhigte Zone ausbildet, in der eine Teilsedimentation des Belebtschlammes erfolgt. Der Ab- oder Überlauf aus dem Belebungsbecken befindet sich innerhalb der strömungsberuhigten Zone. Durch die untere Öffnung der Tauchwand wird eine bodennahe Strömung erzeugt, die Schlammablagerungen hinter der Tauchwand verhindert.

Vorteilhafterweise ist die Tauchwand gemäß Anspruch 2 mit dem ersten Ende des ersten Tauchwandabschnittes zumindest im Bereich der Wasserlinie, insbesondere über die gesamte Höhe der Tauchwand am ersten Ende des ersten Tauchwandabschnittes, mit einer ersten Wandung bzw. einem ersten Wandabschnitt des Belebungsbeckens verbindbar. Durch eine solche Verbindung mit dem Belebungsbecken kann nicht nur eine Verankerung der Tauchwand erreicht werden, sondern kann zusätzlich oder stattdessen auch eine Abdichtung mit dem Belebungsbecken erzielt werden, so dass die Tauchwand am ersten Ende des ersten Tauchwandabschnittes nicht umströmt werden kann.

Unter einer ersten Wandung kann beispielsweise bei einem viereckigen Belebungsbecken eine der vier Seitenwände verstanden werden. Bei einem beispielsweise ovalen oder kreisförmigen Belebungsbecken, ist unter einem ersten beziehungsweise einem zweiten Wandabschnitt jeweils ein Bereich der kreisförmigen oder ovalen Wandung des Belebungsbeckens zu verstehen. Der Überlauf liegt zwischen der ersten und zweiten Wandung beziehungsweise zwischen dem ersten und dem zweiten Wandabschnitt.

Vorteilhafterweise ist die Tauchwand gemäß Anspruch 5 so eingerichtet, dass der erste Tauchwandabschnitt mit der Anströmseite in einem zweiten stumpfen Winkel zur Strömungsrichtung in dem Belebungsbecken angeordnet wird. Würde ein spitzer oder rechter Winkel gewählt, würde die Strömung über weite Teile des ersten Tauchwandabschnittes zu spitzwinklig auf die Tauchwand auftreffen, so dass die ansteigende Unterkante ihre Funktion nicht oder nur in einem zu geringen Ausmaß erfüllen könnte.

Als Strömungsrichtung ist die Strömungsrichtung heranzuziehen, die herrschen würde, wenn die Tauchwand nicht im Belebungsbecken eingesetzt wäre. Durch das Einsetzen der Tauchwand wird, wie oben bereits geschildert, die Strömungsrichtung deutlich beeinflusst. Bei der Anordnung in einem stumpfen Winkel zur Strömungsrichtung ist es jedoch nicht erforderlich, dass ein solcher stumpfer Winkel in jedem noch so kleinen Bereich vorhanden ist. Vielmehr kommt es darauf an, dass ein solcher stumpfer Winkel zur Strömungsrichtung im überwiegenden Teil der Länge des ersten Tauchwandabschnitts vorhanden ist.

Vorteilhafterweise reicht beim Belebungsbecken gemäß Anspruch 13 die Tauchwand am ersten Ende des ersten Tauchwandabschnitts bis zum Boden des Belebungsbeckens und ist insbesondere das erste Ende des ersten Tauchwandabschnittes mit der ersten Wandung bzw. mit dem ersten Wandabschnitt abdichtend verbindbar.

Dabei kommt es nicht darauf an, dass er das erste Ende des ersten Tauchwandabschnittes dichtend mit dem Klärbeckenboden abschließt. Vielmehr ist darauf zu achten, dass das erste Ende des ersten Frontabschnittes im Wesentlichen bis zum Boden des Belebungsbeckens reicht. Dies bedeutet, dass hier durchaus ein Spiel von einigen Zentimetern möglich ist und dass auch mehrere Elemente der Tauchwand zwischen dem Boden des Belebungsbeckens und dem ersten Ende des ersten Tauchwandabschnittes angeordnet sein können. Somit ist beispielsweise denkbar, dass die Tauchwand ein eigenes Fundament aufweist, was zwischen dem unteren Ende des ersten Endes des ersten Tauchwandabschnittes und dem Boden des Belebungsbeckens angeordnet ist. In einem solchen Fall wäre darauf zu achten, dass zwischen dem oberen Ende des Fundamentes und dem unteren Ende des ersten Endes des ersten Tauchwandabschnittes nur ein geringer Zwischenraum verbleibt, hier also nur unbedeutende Wassermengen durchtreten.

Wird das erste Ende des ersten Tauchwandabschnittes mit der ersten Wandung bzw. mit dem ersten Wandabschnitt abdichtbar verbindbar ausgeführt, kann verhindert werden, dass Flüssigkeit den ersten Tauchwandabschnitt im Bereich des ersten Endes umströmt. Dies ist der Separierung förderlich, wie oben geschildert wurde. Eine solche Abdichtung muss jedoch nicht absolut wasser- bzw. luftdicht sein. Vielmehr ist es ausreichend, dass nur unwesentliche Wassermengen zwischen Wandung und erstem Ende des ersten Tauchwandabschnittes durchtreten können. Eine solche Dichtung kann auch auf zahlreiche Weisen, beispielsweise über Lamellendichtungen erzielt werden.

Mit Vorteil weist das erfindungsgemäße Belebungsbecken gemäß Anspruch 8 eine Tauchwand mit ansteigender Unterkante auf, die als gerade Kante ausgebildet ist, die in Richtung des zweiten Endes des ersten Tauchwandabschnitts bis knapp unter die Wasserlinie ansteigt. Eine gerade ansteigende Unterkante gemäß Anspruch 8 verläuft vom ersten Ende des ersten Tauchwandabschnitts hin zum zweiten Ende des ersten Tauchwandabschnittes nach oben. Das bedeutet, dass die Stelle mit der tiefsten Eintauchtiefe der ansteigenden geraden Unterkante im Bereich des ersten Endes des ersten Tauchwandabschnittes angeordnet ist und sich die Stelle mit der geringsten Eintauchtiefe der ansteigenden geraden Unterkante im Bereich des zweiten Endes des ersten Tauchwandabschnittes befindet. Diese oberste Stelle mit der geringsten Eintauchtiefe liegt dabei knapp unter der Wasserlinie. Dabei ist unter Wasserlinie die Wasserlinie zu verstehen, die bei normalem Betrieb mindestens vorhanden ist, also dem niedrigsten normalen Wasserstand entspricht. Durch eine solche Wahl der geringsten Eintauchtiefe der ansteigenden geraden Unterkante soll sichergestellt werden, dass keine an der Oberfläche befindlichen Substanzen unter der Tauchwand hindurch gelangen können, ohne den ersten Tauchwandabschnitt untertauchen oder das zweite Ende des ersten Tauchwandabschnittes zu umströmen. Um das Umströmen des zweiten Endes des ersten Tauchwandabschnittes zu verhindern, ist dort der zweite Tauchwandabschnitt angeordnet. Um eine solche Lage der obersten Stelle der ansteigenden Unterkante zu gewährleisten kann die Tauchwand auch in ihrer Höhe beziehungsweise Lage im Belebungsbecken veränderbar, insbesondere nach oben und untern verfahrbar, ausgebildet sein.

Besonders vorteilhaft ist es, wenn gemäß Anspruch 3 die ansteigende Unterkante im Wesentlichen über die gesamte Länge des ersten Tauchwandabschnittes verläuft. Durch eine solche Anordnung wird die Länge des ersten Tauchwandabschnittes optimal ausgenutzt. Unter im Wesentlichen ist dabei zu verstehen, dass durchaus an den Enden und auch im Verlauf zwischen den Enden Unterbrechungen der ansteigenden Unterkante vorgesehen sein können. Eine solche Unterbrechung kann beispielsweise durch statische Elemente, wie Pfeiler gegeben sein.

Zur Ausnutzung der Länge des ersten Tauchwandabschnittes und zur Schaffung möglichst optimaler Strömungsverhältnisse ist es bevorzugt, die ansteigende Unterkante gemäß Anspruch 4, mit Ausnahme von Bereichen, die zur Abstützung der Tauchwand dienen, über die gesamte Länge des ersten Tauchwandabschnittes auszubilden. Je nach Größe der Tauchwand kann es erforderlich sein, auch in den mittleren Abschnitten des ersten Tauchwandabschnitts stützende Elemente vorzusehen.

Vorteilhafterweise weist der erste stumpfe Winkel eine Winkelöffnung von 1 20 bis 140°, insbesondere von 130° auf. Diese Winkel bzw. dieser Winkelbereich hat sich als besonders vorteilhaft herausgestellt. Wird er eingehalten, ist eine besonders vorteilhafte Umlenkung der Strömung möglich.

Auch bezüglich des zweiten stumpfen Winkels wird ein Winkel von 120 bis 140°, insbesondere von 130° bevorzugt. Die Wahl eines solchen Winkels hat sich als besonders vorteilhaft herausgestellt, da ein besonders vorteilhaftes auftreffen der Strömung insbesondere auf den ersten Tauchwandabschnitt erreicht werden.

Der zweite Tauchwandabschnitt verläuft parallel zu einer zweiten Wandung bzw. zu einem zweiten Wandabschnitt des Belebungsbeckens. Aus diesem Grunde ist es besonders vorteilhaft, wenn die Tauchwand so ausgebildet ist, dass sie eine solche Anordnung ermöglicht. Dies hat den Vorteil, dass dann die Umleitung der Strömung dahingehend besonders vorteilhaft erfolgt, dass sie nach Passieren des zweiten Tauchwandabschnittes mit möglichst wenigen Turbulenzen im Belebungsbecken weiter verläuft. Dadurch wird auch ein Umströmen der Tauchwand minimiert.

Die Tauchwand erstreckt sich nach oben hin über die Wasserlinie hinaus. Durch die Wahl einer ausreichenden Höhe über die Wasserlinie hinaus kann wirksam verhindert werden, dass beispielsweise bei Wellenbildung an der Oberfläche befindliche Substanzen über die Tauchwand hinwegschwappen. Dies ist besonders dann von Vorteil, wenn mit unterschiedlichen Wasserspiegeln gearbeitet werden soll. In diesem Fall ist zu gewährleisten, dass die Tauchwand bei jedem vorgesehenen Wasserspiegel über den Wasserspiegel hinaus reicht bzw. dementsprechend in ihrer Höhe angepasst werden kann.

Vorteilhafterweise ist der zweite Tauchwandabschnitt parallel zu einer zweiten Wandung bzw. zu einem zweiten Wandabschnitt angeordnet. In einer derartigen Anordnung kommt es nicht darauf, dass die zweite Wandung bzw. der zweite Wandabschnitt über die gesamte Länge des zweiten Tauchwandabschnittes parallel zu diesem verläuft. Vielmehr kommt es darauf an, dass die zweite Wandung bzw. der zweite Wandabschnitt auf der Höhe des Endes des zweiten Tauchwandabschnittes, das von dem ersten Tauchwandabschnitt ab gewandt ist, parallel zu dem zweiten Tauchwandabschnitt verläuft. Durch eine solche Anordnung kann ein Umströmen der Tauchwand effektiv verhindert werden und ein besonders gutes Umleiten der Strömung erzielt werden. Dementsprechend kann parallel in einem runden oder ovalen Becken auch bedeuten, dass der zweite Tauchwandabschnitt gebogen ausgeführt werden kann.

Bei besonders tiefen Becken kann es beispielsweise auch angezeigt sein, eine geringere Eintauchtiefe zu wählen. In der Regel wird diese Eintauchtiefe aber 20% der Wassertiefe im Belebungsbecken nicht unterschreiten.

Weitere Ausführmöglichkeiten und Vorteile sollen anhand der Erörterungen der Ausführungsbeispiele erfolgen, die wiederum anhand der nachstehenden Figuren beschrieben werden. Die Figuren sind rein schematisch und schränken den Schutzumfang der Erfindung keineswegs ein. Sie dienen lediglich der Erläuterung.

Die Figuren zeigen im Einzelnen:
- Fig. 1: ein erfindungsgemäßes Belebungsbecken in einer Ansicht von oben;
- Fig. 2: einen in Fig. 1 gekennzeichneten Ausschnitt eines erfindungsgemäßen Belebungsbeckens in einer Ansicht von oben;
- Fig. 3: einen Querschnitt durch ein erfindungsgemäßes Belebungsbecken ent- lang der Tauchwand (Schnitt B-B);
- Fig. 4: einen Querschnitt durch eine erfindungsgemäße Tauchwand (Schnitt A- A); und
- Fig. 5: eine zweite Ausführungsform eines erfindungsgemäßen Belebungsbe- ckens in einer Ansicht von oben.

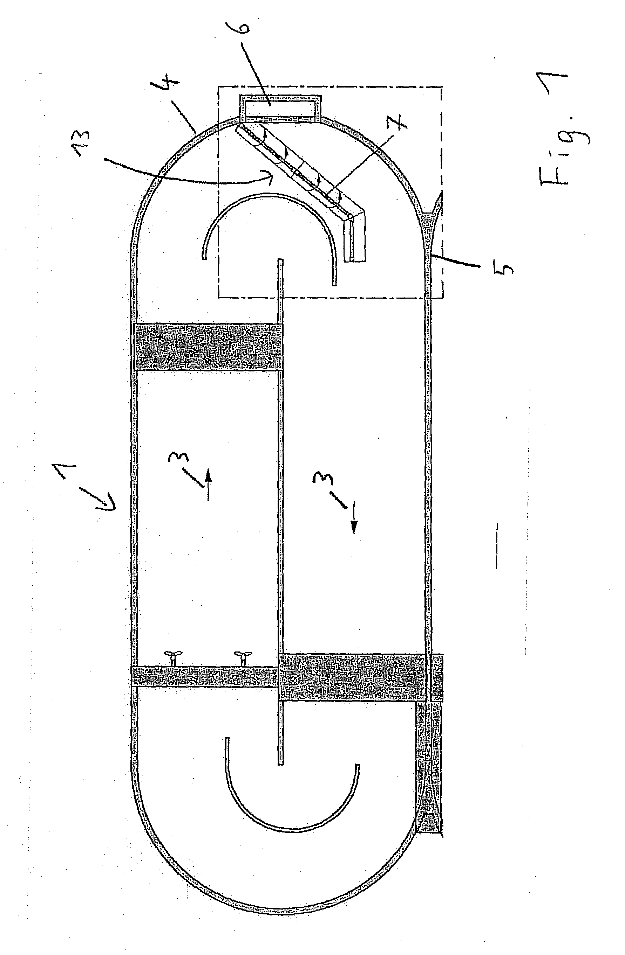

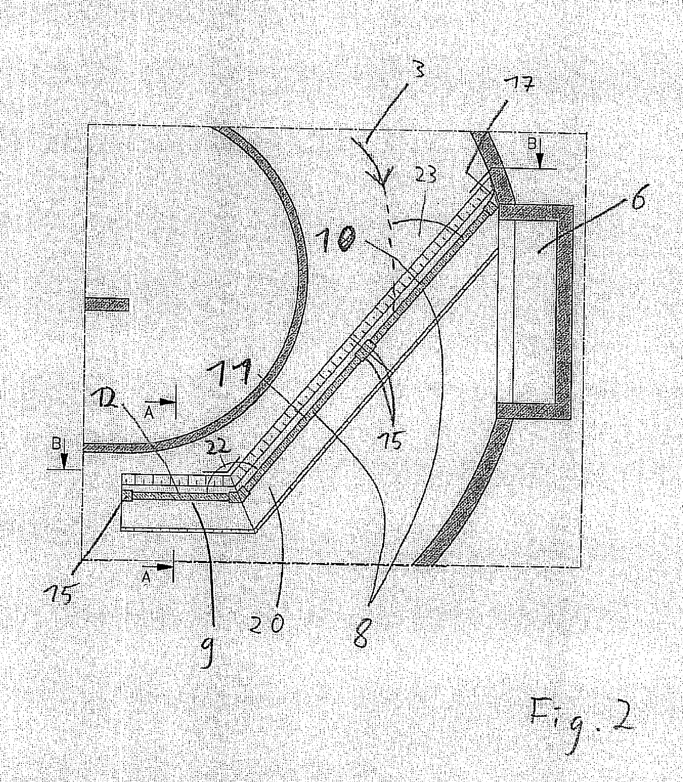

Fig. 1 zeigt ein erfindungsgemäßes Belebungsbecken in einer Ansicht von oben. Zu erkennen ist das Belebungsbecken 1, in dem die Strömungsrichtung 3 durch Pfeile eingezeichnet ist. Das Belebungsbecken 1 weist einen ersten Wandabschnitt 4 und einen zweiten Wandabschnitt 5 auf. Zwischen diesen Wandabschnitten 4,5 ist ein Überlauf 6 angeordnet. An den ersten Wandabschnitt 4 ist eine Tauchwand 7 angeschlossen. Diese Tauchwand 7 weist eine der Strömung 3 zugewandte Anströmseite 13 auf. An der Tauchwand 7 ist die Unterströmung durch gebogene Pfeile verdeutlicht. Die unter der Tauchwand hindurchgelangte Flüssigkeit kann in den Überlauf 6 gelangen. Die in Fig. 1 durch ein gestricheltes Kästchen umrandeten Bereiche sind in Fig. 2 vergrößert dargestellt.

Fig. 2 zeigt einen in Fig. 1 gestrichelt umrandeten Ausschnitt. Zu erkennen ist eine Tauchwand 7 mit einem ersten Tauchwandabschnitt 8 und einem zweiten Tauchwandabschnitt 9. Der erste Tauchwandabschnitt 8 ist gebildet durch ein erstes Tauchwandelement 10 und ein zweites Tauchwandelement 11. Der zweite Tauchwandabschnitt 9 wird gebildet durch ein drittes Tauchwandelement 12. Zwischen dem ersten Tauchwandabschnitt 8 und dem zweiten Tauchwandabschnitt 9 befindet sich ein stumpfer Winkel 22. Der erste Tauchwandabschnitt 8 ist zur Strömungsrichtung 3 in einem zweiten stumpfen Winkel 23 angeordnet. Die Tauchwandelemente 10, 11 und 12 weisen an ihren Enden jeweils Pfeiler 15 auf. Die aneinander angrenzenden Pfeiler 15 sind gegeneinander abgedichtet. Das erste Ende des ersten Tauchwandabschnitts 8 ist durch einer Dichtung 17 mit der ersten Wandung 4 dichtend verbunden. Die Tauchwand 7 steht auf einem Fundament 20.

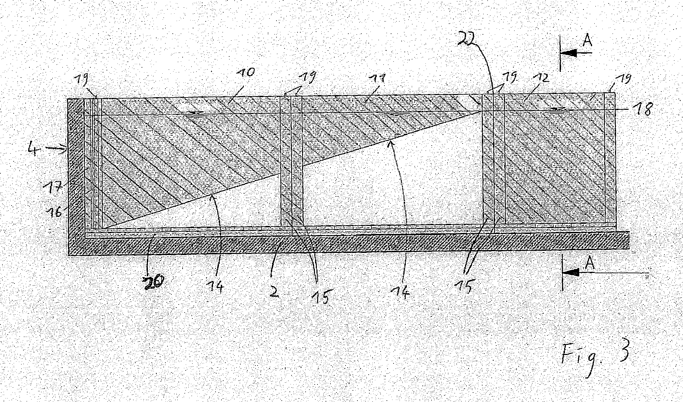

Fig. 3 zeigt einen Schnitt durch das Belebungsbecken der Figuren 1 und 2 entlang des geknickten Schnitts B-B, also entlang der Tauchwand 7. Zu erkennen sind die drei Tauchwandelemente 10, 11 und 12, die die zwei Tauchwandabschnitte 8, 9 bilden. Die Tauchwandelemente 10, 11 und 12 weisen an ihren Enden jeweils Pfeiler 15 auf, die auf dem Fundament 20 ruhen. Das Fundament 20 ist in zu den Tauchwandelementen 10, 11, 12 korrespondierende Abschnitte unterteilt. Somit kann die Tauchwand 7 in ihren Tauchwandelementen 10, 11 und 12 jeweils einzeln aus dem Belebungsbecken 1 herausgehoben werden. Dazu weisen die Pfeiler 15 Hebeösen 19 auf.

Zu erkennen ist, dass sich die Tauchwandelemente 10, 11 und 12 bis oberhalb der Wasserlinie 18 erstrecken.

Der erste Tauchwandabschnitt 8, bestehend aus den Tauchwandelementen 10, 11, weist eine gerade Unterkante auf, die vom ersten Ende des ersten Tauchwandabschnittes, das sich in der Figur 3 am linken Rand befindet, nach oben hin zum zweiten Ende des ersten Tauchwandabschnittes ansteigt. Die ansteigende gerade Unterkante endet mit ihrem höchsten Punkt, der die geringste Eintauchtiefe aufweist, genau an der Wasserlinie. Dies ist eine Idealdarstellung. In der Praxis wird der höchste Punkt knapp unterhalb der Wasserlinie liegen, um auch bei geringfügigen Schwankungen der Wasserlinie sicherstellen zu können, dass der oberste Punkt der ansteigenden geraden Unterkante unterhalb der Wasserlinie liegt. Dabei sollte dieser Punkt soweit unterhalb der Wasserlinie liegen, dass die an der Oberflächebefindlichen Substanzen die Tauchwand nicht untertauchen können.

Unterbrochen wird die ansteigende gerade Unterkante durch zwei Pfeiler 15, die der Stabilität dienen.

Das erste Ende des ersten Tauchwandabschnitts 8 ist über eine Klemmleiste 16 mit dem ersten Wandabschnitt 4 verbunden. An dieser Verbindungsstelle ist eine Dichtung 17 vorgesehen.

Das am zweiten Ende des ersten Tauchwandabschnittes 8 in einem stumpfen Winkel 22 angeordnete dritte Tauchwandelement 12, das den zweiten Tauchwandabschnitt 9 bildet, ragt mit seiner untersten Stelle bis zum Fundament 20, also im Wesentlichen bis zum Boden des Belebungsbeckens 2. Somit ragt der zweite Tauchwandabschnitt 9 deutlich tiefer in das Belebungsbecken hinein, als der oberste Punkt der ansteigenden geraden Unterkante, der idealisiert genau auf der Wasserlinie liegt. Vielmehr weist der zweite Tauchwandabschnitt eine Eintauchtiefe auf, die mit der des tiefsten Punktes der ansteigenden geraden Unterkante korrespondiert.

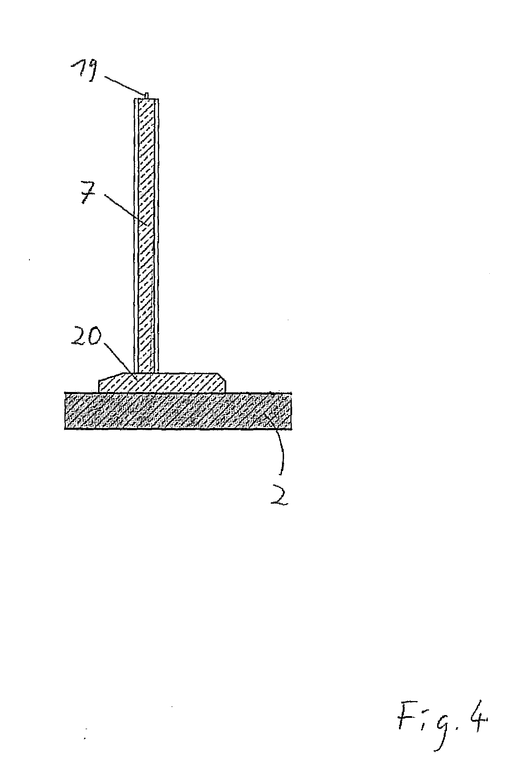

Fig. 4 zeigt einen Querschnitt durch eine erfindungsgemäße Tauchwand 7, die auf einem Boden 2 eines Belebungsbeckens 1 steht. Der Schnitt verläuft entlang der Linie A-A aus den übrigen Figuren.

Zu erkennen ist, dass die Tauchwand 7 auf einem Fundament 20 ruht, das auf dem Boden 2 des Belebungsbeckens 1 steht. Zu erkennen ist, dass das Fundament 20 abgerundete Kanten aufweist. Zu erkennen ist desweiteren eine Hebeöse 19, über die die Tauchwandelemente 10, 11, 12 aus einem Belebungsbecken 1 herausgehoben bzw. in ein solches hineingesetzt werden können. Dies kann beispielsweise zum Nachrüsten von Tauchwänden 7 bzw. Tauchwandelementen 10, 11 und 12 geschehen.

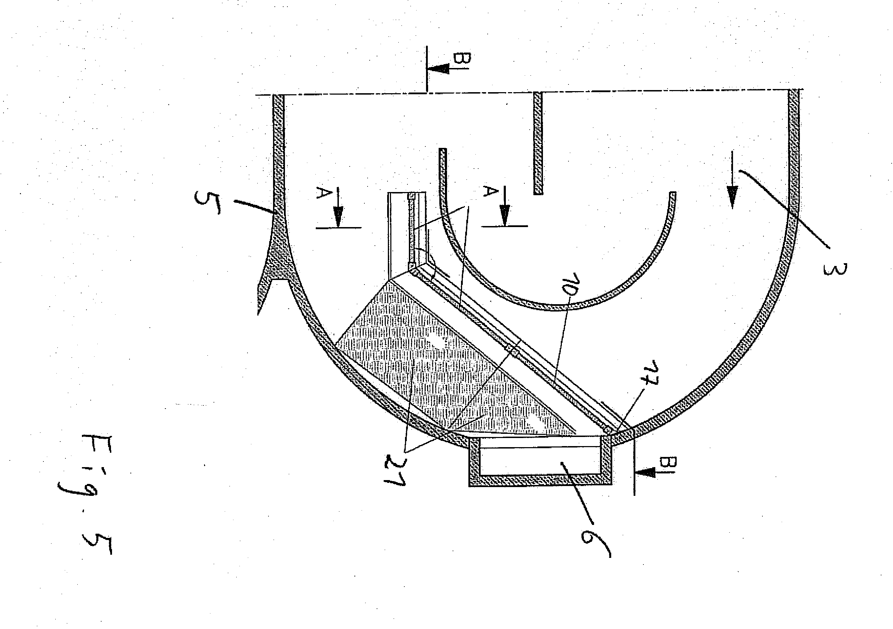

Fig. 5 zeigt eine zweite Ausführungsform des erfindungsgemäßen Belebungsbeckens 1 in einer Ansicht von oben. Dabei ist die Tauchwand 7 ausgebildet wie in den vorstehenden Figuren gezeigt. Darüber hinaus kann sich für einen nachträglichen Einbau im Belebungsbecken eine Anordnung von Betonplatten 21 befinden. Diese Betonplatten 21, für die auch andere Werkstoffe gewählt werden können, liegen auf dem Boden 2 des Belebungsbeckens 1 und erstrecken sich vom Ende des Fundamentes 20 bis zur Wandung des Belebungsbeckens. Sie befinden sich in Strömungsrichtung hinter der Tauchwand 7. Durch solche Betonplatten 21, insbesondere zusammen mit der Verbindung des ersten Tauchwandelementes 8 mit dem ersten Wandabschnitt 4, wird ein Verrutschen der Tauchwand aufgrund der Strömungslast auf einfache Weise effektiv verhindert. Zu diesem Zweck sind die einzelnen Tauchwandelemente 10, 11 und 12 also auch die einzelnen Tauchwandabschnitte 8, 9 miteinander verbunden.

Weitere vorteilhafte Ausbildungen lassen sich durch den Fachmann auffinden und den jeweiligen Anforderungen anpassen.

### Bezugszeichenliste:

- 1: Belebungsbecken
- 2: Belüftungsbeckenboden
- 3: Strömungsrichtung
- 4: Erster Wandabschnitt
- 5: Zweiter Wandabschnitt
- 6: Überlauf zum Nachklärbecken
- 7: Tauchwand
- 8: Erster Tauchwandabschnitt
- 9: Zweiter Tauchwandabschnitt
- 10: erstes Tauchwandelement
- 11: zweites Tauschwandelement
- 12: drittes Tauschwandelement
- 13: Anströmseite
- 14: Unterkante
- 15: Pfeiler
- 16: Klemmleiste
- 17: Dichtung
- 18: Wasserlinie
- 19: Hebeöse
- 20: Fundament
- 21: Betonplatte
- 22: Erster stumpfer Winkel
- 23: Zweiter stumpfer Winkel

## Patentansprüche

1. Tauchwand (7) zum Einsetzen in ein einen Ab- oder Überlauf (6) aufweisendes Belebungsbecken (1), aufweisend mindestens einen ersten Tauchwandabschnitt (8) und einen zweiten Tauchwandabschnitt (9), wobei der erste Tauchwandabschnitt (8) eine von einem ersten Ende des ersten Tauchwandabschnitts (8) weg und nach oben ansteigende Unterkante (14) aufweist und wobei der zweite Tauchwandabschnitt (9) in einem ersten stumpfen Winkel (22) zu einer Anströmseite (13) des ersten Tauchwandabschnitts (8) an einem zweiten Ende des ersten Tauchwandabschnitts (8) anschließt und wobei sich der zweite Tauchwandabschnitt (9) nach unten hin mindestens bis zur obersten Stelle der ansteigenden Unterkante (14) erstreckt.

2. Tauchwand (7) nach Anspruch 1, **dadurch gekennzeichnet, dass** die Tauchwand (7) mit dem ersten Ende des ersten Tauchwandabschnitts (8) zumindest im Bereich der Wasserlinie (18), insbesondere über die gesamte Höhe der Tauchwand am ersten Ende des ersten Tauchwandabschnitts (8), mit einer ersten Wandung beziehungsweise einem ersten Wandabschnitt (4) des Belebungsbeckens (1) verbindbar ist.

3. Tauchwand (7) nach einem der Ansprüche 1 oder 2, **dadurch gekennzeichnet, dass** sich die ansteigende Unterkante (14) im Wesentlichen über die gesamte Länge des ersten Tauchwandabschnitts (8) erstreckt.

4. Tauchwand (7) nach Anspruch 3, **dadurch gekennzeichnet, dass** sich die ansteigende Unterkante (14) mit Ausnahme von Bereichen, die im Fall einer Nachrüstung zur Abstützung der Tauchwand (7) dienen, über die gesamte Länge des ersten Tauchwandabschnitts (8) erstreckt.

5. Tauchwand (7) nach einem oder mehreren der vorstehenden Ansprüche, **dadurch gekennzeichnet, dass** der erste Tauchwandabschnitt mit dem zweiten Tauchwandabschnitt einen stumpfen Winkel (22) bildet.

6. Belebungsbecken mit einer Tauchwand (7) nach einem der vorstehenden Ansprüche, **dadurch gekennzeichnet, dass** der erste Tauchwandabschnitt (8) so eingerichtet ist, dass er mit der Anströmseite (13) in einem zweiten stumpfen Winkel (23) zur Strömungsrichtung (3) im Belebungsbecken (1) angeordnet ist.

7. Belebungsbecken mit einer Tauchwand (7) nach einem der vorstehenden Ansprüche, **dadurch gekennzeichnet, dass** das erste Ende des ersten Tauchwandabschnitts (8) bis zum Boden des Belebungsbeckens reicht und insbesondere mit der ersten Wandung bzw. mit dem ersten Wandabschnitt abdichtend verbunden ist.

8. Belebungsbecken mit einer Tauchwand (7) nach einem der vorstehenden Ansprüche, **dadurch gekennzeichnet, dass** die ansteigende Unterkante (14) des ersten Tauchwandabschnitts eine gerade Kante bildet, die in Richtung des zweiten Endes des ersten Tauchwandabschnitts (8) bis knapp unter die Wasserlinie ansteigt.

9. Belebungsbecken mit einer Tauchwand (7) nach einem der vorstehenden Ansprüche, **dadurch gekennzeichnet, dass** die Anströmung auf die Tauchwand zur Innenseite einen stumpfen Winkel (23) bildet.

10. Belebungsbecken mit einer Tauchwand (7) nach einem der vorstehenden Ansprüche, **dadurch gekennzeichnet, dass** sich der zweite Tauchwandabschnitt (9) bis zur Beckensohle erstreckt.

11. Belebungsbecken, aufweisend einen Ab- oder Überlauf (6) und eine Tauchwand (7) nach einem der vorstehenden Ansprüche, wobei der Ab- oder Überlauf (6) in Strömungsrichtung hinter der Tauchwand (7) liegt.

12. Belebungsbecken, nach Anspruch 10, **dadurch gekennzeichnet, dass** der Ablauf aus dem Belebungsbecken (1) in ein Nachklärbecken führt.

13. Belebungsbecken, nach einem der Ansprüche 9 bis 12, **dadurch gekennzeichnet, dass** sich die Tauchwand (7) nach oben bis oberhalb der Wasserlinie (18) erstreckt und am ersten Ende des ersten Tauchwandabschnitts (8) sich nach unten bis mindestens 20%, insbesondere bis mindestens zur Hälfte, insbesondere bis mindestens 90%, der Wassertiefe des Belebungsbeckens (1) erstreckt, sich insbesondere im Wesentlichen bis zum Boden (2) des Belebungsbeckens (1) erstreckt.

14. Verwendung einer Tauchwand (7) nach einem der Ansprüche 1 bis 5 zum Zurückhalten von an oder auf der Wasseroberfläche befindlichen Substanzen, insbesondere von Schwimmschlamm.
